# EUROPEAN PATENT SPECIFICATION

(11) **EP 3 052 997 B1**
(45) Date of publication and mention of the grant of the patent: **12.12.2018**
(21) Application number: 14824174.8
(22) Date of filing: 01.10.2014
(51) Int. Cl.: G05B 15/02, F16F 15/02, G05B 17/02, G05D 3/12, G05B 19/40, G05B 19/404

(54) **RESONANCE MOVEMENT DAMPENING SYSTEM FOR AN AUTOMATED LUMINAIRE**
RESONANZBEWEGUNGSDÄMPFUNGSSYSTEM FÜR EINE AUTOMATISIERTE LEUCHTE
SYSTÈME D'AMORTISSEMENT DE MOUVEMENT DE RÉSONANCE POUR UN LUMINAIRE AUTOMATISÉ

(30) Priority: 01.10.2013 US 201361885035 P
(43) Date of publication of application: 10.08.2016
(73) Proprietor: Robe Lighting, Inc, Sunrise, FL 33325 (US)
(72) Inventor: KUBIS, Frantisek, Austin, TX 78720 (US)
(74) Representative: Hanna Moore + Curley
(86) International application number: PCT/US2014/058688
(87) International publication number: WO 2015/051036

(56) References cited:
- EP-A1- 2 590 044
- WO-A2-03/079532
- US-A- 5 406 176
- US-A1- 2009 231 864

## Description

### TECHNICAL FIELD OF THE INVENTION

The present invention generally relates to a method for controlling the movement resonances in an automated luminaire, specifically to a method relating to predicting and applying opposing forces in order to dampen such resonances.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. The motors used to drive these systems are often stepper motors which are driven from a motor control system within the luminaire. The connected systems, particularly those for the pan and tilt movement, may be connected through drive belts or other such gear systems and, because of the flexibility of the drive, and the mass of the driven load, exhibit significant resonances of the movement which result in bounce or overshoot. Considering as an example, the use of such a product in a theatre, it is common for an automated luminaire to be situated at some considerable distance from the stage, perhaps 15,24 meters (50 feet) or more. At such a distance very small positional movements of the luminaire will produce a correspondingly large movement of the light beam where it impinges on the stage. In the example given of a 15,24 meter (50 feet) throw, a displacement of 2.54 cm (1 inch) on the stage would be caused by a change in angle of either of the pan and tilt axes of the light of only 0.1 degree. If we consider that a positional accuracy of the light on the stage of less than 2,54 cm (1 inch) is desirable we can see that a very high degree of rotational accuracy is desirable for the pan and tilt systems.

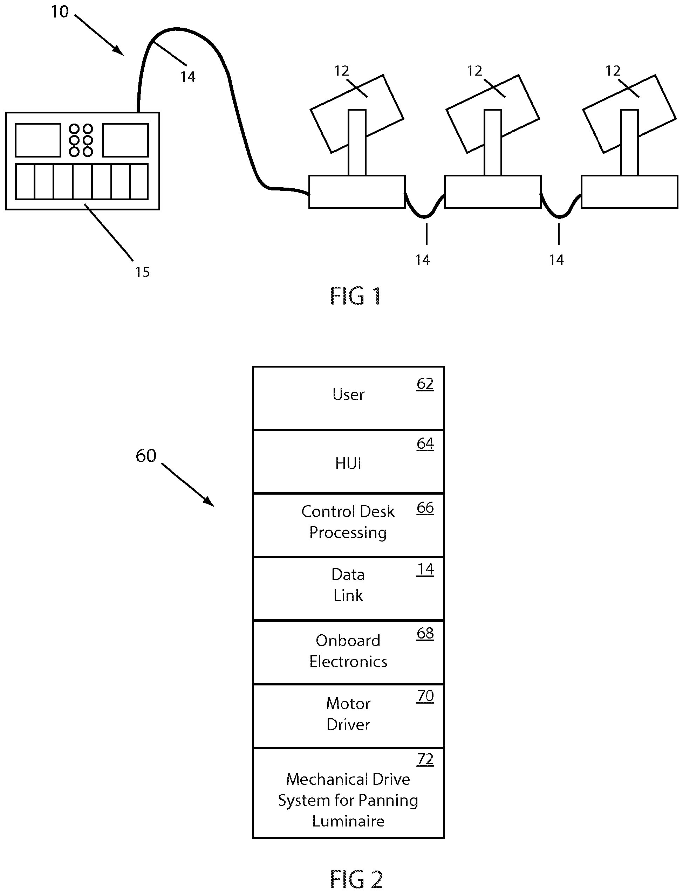

**Figure 1** illustrates a typical multiparameter automated luminaire system **10.** These systems typically include a plurality of multiparameter automated luminaires **12** which typically each contain on-board a light source (not shown), light modulation devices, electric motors coupled to mechanical drives systems and control electronics (not shown). In addition to being connected to mains power either directly or through a power distribution system (not shown), each luminaire is connected is series or in parallel to data link **14** to one or more control desks **15.** The luminaire system **10** is typically controlled by an operator through the control desk **15.**

**Figure 2** illustrates different levels of control **60** of a parameter of the light emitted from a luminaire. In this example the levels are illustrated for one parameter: pan (typically movement in a horizontal plane). The first level of control 62 is the user who decides what he wants and inputs information into the control desk through a typical computer human user interface(s) (HUI) 64. The control desk hardware and software then processes the information and sends a control signal to the luminaire via the data link **14.** The control signal is received and recognized by the luminaire's on-board electronics 68. The onboard electronics 68 typically includes a motor driver **70** for the pan motor (not shown). The motor driver **70** converts a control signal into electrical signals which drive the movement of the pan motor (not shown). The pan motor is part of the pan mechanical drive **72.** When the motor moves it drives the mechanical drive **72** to drive the mechanical components which cause the light beam emanating from the luminaire *to* pan across the stage.

In some systems it may be possible that the motor driver **70** is in the control desk **15** rather than in the luminaire **12** and the electrical signals which drive the motor are transmitted via an electrical link: directly to the luminaire. It is also possible that the motor driver 70 is integrated into the main processing within the luminaire **12.** While many communications linkages are possible, most typically, lighting control desks communicate with the luminaire through a serial data link; most commonly using an industry standard RS485 based serial protocol commonly referred to as DMX-512. Using this protocol, the control desk **15** typically transmits a 16 bit value for pan and a 16 bit value for tilt parameters to the luminaire. Sixteen (16) bits provides for 65,536 values or steps which provides plenty of controller instruction accuracy for a typical application. If the total motion around an axis is 360 degrees then a 16 bit instruction can provide accuracy of approximately 0.005 degrees (360°/65,536). With this level of accuracy in the control instructional portion of the control system, the limiting factor in controlling the accuracy of the luminaire's motion predominantly lies with the mechanical systems used to move the pan and tilt axes.

Various systems have offered solutions to resonance. One solution is to provide deliberate dampening or friction to the system to smooth and minimize slack and tolerances. In practice such systems are difficult to control and difficult to manufacture repeatedly and consistently. Additionally any deliberate addition of friction will of necessity increase the power and size of motors needed and/or slow down the maximum possible movement speed.

Other solutions utilize highly accurate position sensors on the driven or output shaft of the device rather than, as is more common with servo systems, on the motor or driver shaft. Such systems are expensive to manufacture and may require significant processing power for each motor to ensure that smooth accurate movement occurs without hunting or overshoot.

Other systems utilize 'hunting' or 'backstepping' techniques where the system homes in on the final desired position by taking small controlled steps towards it while monitoring the position accurately. Such a system is disclosed in US Patent 5,227,931 to Misumi which covers an anti-hysteresis system by backstepping. This system is slow to operate, requires an accurate sensor on the driven shaft and produces motion in the driven shaft while the final position is sought. It is important in theatrical applications that the driven shaft moves rapidly and accurately to its final position with no visible oscillation
or hunting to find its resting point. Any such motion would be noticeable and distracting to the audience.

A yet further solution is to oscillate the output shaft about its final position to equalize any stress, slack or tolerance in the drive system and center the shaft. US patent 5,764,018 to Liepe et al. uses a 'shaking' system where reducing oscillations center the driven shaft. This methodology has the disadvantage in that it gives significant and noticeable movement in the output not appropriate for the entertainment lighting application.

While the Misumi and Liepe systems may eventually and consistently get to the right position, the process of getting there may be worse than the resonance and hysteresis problems they solve in an automated luminaire application.

US Patent 6,580,244 to Tanaka et al discloses using two servo motors driven antagonistically to ensure tension is always in the same direction in the drive chain to avoid backlash. Although this provides good control of backlash when the system is always rotating in one direction to its final position, it doesn't cope as well with a system which has no prior knowledge of that direction and that can be required to travel to the same target position from either direction interchangeably. Accurate servos with sensors or encoders are still required for final positioning.

US Patent 5,406,176 A to Sugden discloses a stage or theatre lighting system having a plurality of multiple parameter lamp units. Each lamp unit comprises means for producing a light beam, drive means, lamp processor means, and lamp memory means. The means for producing the light beam have a plurality of adjustable parameters relating to beam characteristics and beam position. The drive means control a plurality of said parameters. Further, the lamp processor means are used for controlling said drive means. The lamp memory means store data and programs for execution by said lamp processor means. In particular, the described system uses the lamp memory means for storage of an operating program and for storage of lamp cue data. An internal clock means and command means are configured to operably command said operating program to execute said stored cue data in a desired, pre-programmed time and sequence using said internal clock means.

US Patent Application Publication No. US 2009/0231864 A1 to Polasek relates to a motor drive system and more specifically to the configuration and control of motors and drive systems to move an output shaft in an automated multiparameter luminaire. In particular, the automated multiparameter luminaire utilizes two motors driving a single output shaft through common or separate drive trains. After the control system detects that the system has come to rest, the unit relaxes and equalizes the slack and/or tension in the drive train by first rotating the two motors as an antagonistic pair in opposing directions in one rotation direction, then reversing this turn by rotating the two motors as an antagonistic pair in the opposite direction and finally recentering the two motors to the desired position. Such a move ensures that all slack and/or tension is centered ready for a further move.

Further, International Patent Application Publication No. WO 03/079532 A2 to Georgia Tech Research Corporation teaches command generation combining input shaping and smooth baseline functions.

There is a need for a system which can provide resonance control to ensure accurate positioning of an automated luminaire motion control system without the necessity for accurate position sensors.

### SUMMARY

The invention is defined in claim 1. Particular embodiments are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a multiparameter automated luminaire lighting system which employs the dampening system;
**FIGURE 2** illustrates an embodiment of the levels of control employed in controlling a parameter of an automated luminaire;
**FIGURE 3** illustrates the movement velocity timing diagram of a prior art automated luminaire;
**FIGURE 4** illustrates the movement velocity timing diagram of an embodiment of the invention;
**FIGURE 5** illustrates resonances of a typical motor system in an automated luminaire;
**FIGURE 6** illustrates the desired opposing forces needed to oppose resonances of a typical motor system in an automated luminaire; and
**FIGURE 7** illustrates the resultant resonances with the dampening system described herein.

### DETAILED DESCRIPTION OF THE INVENTION

Preferred embodiments of the present invention are illustrated in the FIGUREs, like numerals being used to refer to like and corresponding parts of the various drawings.

The present invention generally relates to motor control systems and specifically to the use of a predictive resonance prevention system to move an output shaft in an automated luminaire. The system disclosed provides smooth movement and negates or cancels out resonances producing bounce or overshoot in the final positioning of the output shaft.

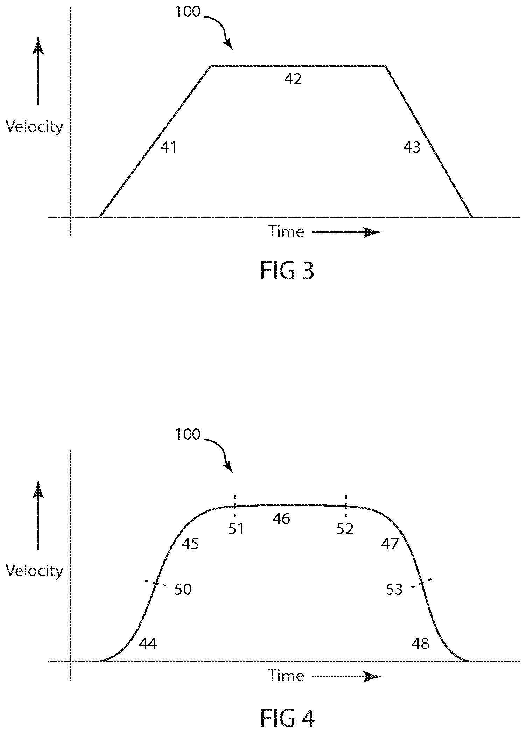

Figure 3 illustrates the movement velocity timing diagram 100 of a typical prior art automated luminaire. The vertical axis is velocity of movement, while the horizontal axis represents time. The movement starts from zero velocity with a constant acceleration period 41 leading to a fixed movement velocity 42 with zero acceleration. At the end of the move the motor enters a constant deceleration phase 43 before coming to a stop. One problem with such a profile is that there are large changes in acceleration at the sharp 'knees' of this profile as movement starts and changes from zero acceleration to a constant acceleration with increasing velocity, changes from constant acceleration with increasing velocity to zero acceleration and constant velocity, changes from zero acceleration to constant deceleration and decreasing velocity, and finally changes to zero deceleration again. These changes in acceleration (variously referred to as rate of change of acceleration, third order movement, d³x/dy³ or 'jerk') induce resonances in the mechanical system causing the motor to oscillate, or bounce, when it comes to a rest.

The invention addresses this problem in two ways. Firstly, as shown in Figure 4, which is a movement velocity timing diagram 100 of an embodiment of the invention, the sharp 'knees' where acceleration abruptly changes are replaced by a more gradual change from one acceleration level to another. Movement again starts from rest, then enters a phase of gradually increasing acceleration 44 before reaching constant acceleration through point 50. This is reversed through 45 and acceleration is reduced to zero again by point 51 when constant velocity motion 46 is underway. Bringing the motor to a halt follows a similar procedure, gradually increasing deceleration 47, constant deceleration 53, and gradually decreasing deceleration 48 to the final rest position. Such motion significantly reduces the third order 'jerk' or d³x/dy³ forces on the motor axis and thus reduces induced resonances. Such resonances are particularly noticeable when the motor is brought to a halt, as they result in the luminaire bouncing or oscillating about its final position.

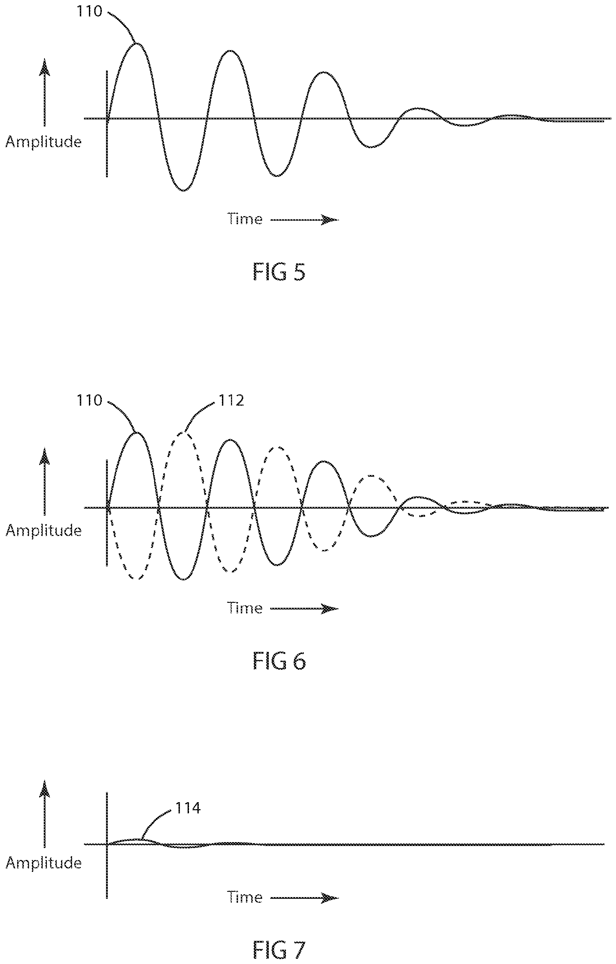

However, this technique doesn't remove all resonance, as the motion itself and the momentum of the moving mass will excite some resonance in the movement. Figure 5 illustrates resonances of a typical motor system in an automated luminaire. The frequency of this resonance 110 will vary from unit to unit in manufacturing depending on material stiffness, mass and so on, but will remain essentially constant for that axis throughout its life. Figure 5 shows conventional resonance as well known in the art with very little dampening. It is, of course, possible to add mechanical dampening to prevent this kind of resonance and, indeed, many prior art products use this technique. However, such dampening also provides resistance to movement and also slows down the possible maximum speed of a motion of the axis. An embodiment employed instead predicts and induces deliberate forces counter to this resonance so as to cancel it out and dampen motion without slowing down movement speed. This is achieved by first measuring and storing the resonance and motion characteristics shown in Figure 5 within the onboard electronics 68 of the automated luminaire. The electronics, knowing the resonance curve and also knowing the desired movement from the instructions received through data link 14 from control desk 15, can predict the resonance curve that that motion will produce, and calculate the opposing forces needed to counter it. In some embodiments the measurement of the resonance and motion characteristics may be done in quality control, during design of the product, or during a test procedure before the product is shipped. These complex measurements may further be modeled and simplified by off-line software in order to produce a simpler, possibly parameterized, software model for storage in the onboard electronics 68 of the automated luminaire. This simplified model of the mechanical system and its resonances is suitable for real-time or near real-time processing within onboard electronics 68 which may be less computationally powerful than the off-line system used to create the model.

Figure 6 shows the desired opposing forces 112 needed to counter resonance 110 in a typical motor system in an automated luminaire. The dampening system counters these resonance forces by dynamically adjusting the shape and time of the change of acceleration portions **44, 45, 47,** and **48** of the motion time instruction profile. This allows the system to introduce deliberate rate of change of acceleration, (third order 'jerk' or d³x/dy³) forces on the motor axis and thus induce motion in direct opposition to the resonances and cancel those resonances out.

The calculations needed to predict this motion and generate the appropriate jerk motion in the movement are done dynamically and continuously based on the current motion of the motor axis, its position, velocity, and acceleration, as well as incoming instructions from control desk 15 in such a manner so as not to alter the final position of the motor axis, and thus the automated luminaire. With the system of the invention in operation, resonance may be reduced to a very low level such as illustrated in curve **114** in **Figure 7****,** which illustrates the resultant resonances with the dampening system described herein. This results in a rapid and controlled positioning of the motor axis, and thus the automated luminaire, to its desired position with high accuracy and minimal bouncing or overshoot. The critical final positioning, when the motor axis comes to a halt, is virtually free of any bouncing or oscillation and the automated light may be moved at high speeds then brought to an accurate and final stop.

The dynamic correction of resonance in this manner using control of the rate of change of acceleration may be carried out at rates comparable to that of the incoming control signal over a DMX512 link. In further embodiments of the invention higher update rates comparable to that of the stepper motor update rate, perhaps 100 microseconds, may be used. This allows the correction and resonance cancellation to occur effectively in real-time, with the system tracking and following any changes to the incoming control signal over a DMX512 link.

A further advantage of the invention is that no new hardware is required and it may be possible, if the control electronics are powerful enough, to retrofit the appropriate software to existing units without any physical modification.

In some embodiments of the invention the resonance characteristics of the motion of the motor axes of an automated light may be measured during manufacture and stored within the luminaire.

In further embodiments of the invention, the resonance characteristics of the motion of the motor axes of an automated light may be measured using feedback sensors on the luminaire during operation including but not limited to accelerometers, gyros, optical encoders.

In further embodiments of the invention, the movement and resonance characteristics of the motion of the motor axes of an automated light may be measured using feedback sensors on the luminaire during operation and the counter resonance jerk applied in a closed loop manner using continuous feedback from those sensors.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

## Claims

1. An automated luminaire with a motor driver (70) and onboard electronics (68), the motor driver (70) being configured to convert a control signal into electronic signals which drive a motor of the automated luminaire (12);
**characterized in that**:
the onboard electronics (68) is configured to:
measure and store resonance and motion characteristics within the onboard electronics (68),
receive instructions for a desired movement,
predict a resonance that the movement will produce based on the previously measured and stored resonance and motion characteristics,
calculate an opposing force needed to counter the resonance, the resonance being countered by dynamically adjusting the shape and time of rates of acceleration in driving the motor, and
induce the opposing force to reduce motion resonances.

2. The automated luminaire of claim 1, wherein the resonance and motion characteristics are measured and stored in the luminaire.

3. The automated luminaire of claim 1, wherein the resonance and motion characteristics are measured and stored during luminaire operation using feedback sensors.

## Patentansprüche

1. Automatisierte Leuchte mit einem Motortreiber (70) und
einer Bordelektronik (68), wobei der Motortreiber (70) konfiguriert dazu ist, ein Steuersignal in elektronische Signale umzuwandeln, die einen Motor der automatisierten Leuchte (12) antreiben;
**dadurch gekennzeichnet, dass**:
die Bordelektronik (68) konfiguriert ist, um:
Resonanz- und Bewegungseigenschaften innerhalb der Bordelektronik (68) zu messen und zu speichern,
Anweisungen für eine gewünschte Bewegung zu erhalten,
basierend auf den zuvor gemessenen und gespeicherten Resonanz- und Bewegungseigenschaften eine Resonanz vorherzusagen, die die Bewegung erzeugen wird,
eine Gegenkraft zu berechnen, die erforderlich ist, um der Resonanz entgegenzuwirken, wobei der Resonanz durch dynamisches Anpassen der Form und der Zeit der Beschleunigungsraten beim Antreiben des Motors entgegengewirkt wird, und
die Gegenkraft zu induzieren, um Bewegungsresonanzen zu reduzieren.

2. Automatisierte Leuchte nach Anspruch 1, wobei die Resonanz- und Bewegungseigenschaften in der Leuchte gemessen und gespeichert werden.

3. Automatisierte Leuchte nach Anspruch 1, wobei die Resonanz- und Bewegungseigenschaften während des Leuchtenbetriebs unter Verwendung von Rückmeldesensoren gemessen und gespeichert werden.

## Revendications

1. Luminaire automatisé ayant un étage pilote de moteur (70) et une électronique embarquée (68), l'étage pilote de moteur (70) étant configuré pour convertir un signal de commande en signaux électroniques qui pilotent un moteur du luminaire automatisé (12) ;
**caractérisé par le fait que** :
l'électronique embarquée (68) est configurée pour :
mesurer et stocker des caractéristiques de résonance et de mouvement à l'intérieur de l'électronique embarquée (68),
recevoir des instructions pour un mouvement souhaité,
prédire une résonance que le mouvement produira, sur la base des caractéristiques de résonance et de mouvement mesurées et stockées précédemment,
calculer une force opposée nécessaire pour contrer la résonance, la résonance étant contrée par ajustement dynamique de la forme et de la durée de taux d'accélération dans le pilotage du moteur, et
induire la force opposée pour réduire des résonances de mouvement.

2. Luminaire automatisé selon la revendication 1, dans lequel les caractéristiques de résonance et de mouvement sont mesurées et stockées dans le luminaire.

3. Luminaire automatisé selon la revendication 1, dans lequel les caractéristiques de résonance et de mouvements sont mesurées et stockées pendant le fonctionnement du luminaire à l'aide de capteurs de rétroaction.
